# EUROPÄISCHE PATENTSCHRIFT

(11) **EP 2 105 332 B1**
(45) Veröffentlichungstag und Bekanntmachung des Hinweises auf die Patenterteilung: **06.01.2010**
(21) Anmeldenummer: 08102897.9
(22) Anmeldetag: 25.03.2008
(51) Int. Cl.: B60J 3/02

(54) **Sonnenblende mit Plastikspiegel**
Sun blind with plastic mirror
Pare-soleil doté d'un miroir en plastique

(43) Veröffentlichungstag der Anmeldung: 30.09.2009
(73) Patentinhaber: SMR Patents S.à.r.l., 1653 Luxembourg (LU)
(72) Erfinder: Bruhnke, Ulrich, 71139, Ehningen (DE); Wilfinger, Kurt, 71563, Affalterbach (DE)
(74) Vertreter: Rausch, Gabriele

(56) Entgegenhaltungen:
- EP-A- 0 076 174
- WO-A-2006/080124
- DE-A1- 10 153 154
- FR-A- 2 431 932
- GB-A- 2 009 022
- US-A1- 2003 001 301

## Beschreibung

Die Erfindung bezieht sich auf eine Sonnenblende für Fahrzeuge, mit einem Spiegel, der vertieft in einer Aussparung des Sonnenblendenkörpers liegt, und einer manuell betätigbaren Spiegelabdeckung. Der Spiegel besteht aus einen Plastikglas mit integrierten Führungselementen. Die Abdeckung des Spiegels ist dabei beispielsweise ein aus Kunststoff bestehender Schieber, der auf der dem Spiegel abgekehrten Seite eine Griffleiste aufweist und mit seinen in der Verschieberichtung verlaufenden Rändern in je eine nutartige Führung eingreift.

### Stand der Technik

Bei den zurzeit gebräuchlichen Sonnenblenden mit einer Spiegelabdeckung in Form eines Schiebers wird der Schieber mit seinen in der Verschieberichtung verlaufenden Rändern in U-förmigen der V-förmigen Führungen geführt. Die U-förmigen Führungen bewirken eine dreiseitige Flächenberührung im oberen und unteren Führungsbereich des Schiebers, die eine kontrollierbare und beherrschbare Gleitung des Schiebers in den Führungen erschwert. In der Regel werden die Teile, d.h. der Schieber und die Führungen mit einem masslich sehr großen Toleranzspiel produziert, um den Schieber auch noch bei größeren Temperaturschwankungen betätigen zu können. Dieses relativ große Toleranzspiel führt aber häufig zu Reklamationen, da sich hierdurch der Schieber ungewollt verschieben kann und auch - was noch weniger erwünscht ist - zu einer recht unangenehmen Geräuschquelle entwickeln kann, indem er Klappergeräusche verursacht. Um ein verbessertes Gleiten des Schiebers in den U-förmigen Führungen zu erreichen, wurden schon an den in der Verschieberichtung verlaufenden Rändern des Schiebers Metallfedern angeordnet, die aber nicht dazu führen konnten, die unangenehmen Klappergeräusche abzustellen. Eine weitere Verbesserung wurde mit der DE 10164887 durch eine V-förmige Nut erreicht. Zur Abdeckung von Spiegeln in Sonnenblenden sind auch Abdeckklappen bekannt. Beispielsweise wird in der DE4440606 eine Abdeckung beschrieben, die in einer angeformten Nase des Spiegelrahmens angebracht ist.

Dokument DE 101 53 154 A1 beschreibt eine Sonnenblende gemäß dem Öberbegriff des Anspruchs 1.

Das Problem der zuverlässigen Führung einer Abdeckung wie eines Schiebers, oder einer Abdeckklappe wird durch die Verwendung unterschiedlicher Materialien und deren unterschiedliche Wärmeausdehnung verschärft. Es ist daher die Aufgabe der Erfindung dieses Problem zu lösen und einen Sonnenblende vorzuschlagen, deren Materialen aus Kunststoff und wenigen metallischen Elementen besteht

Zur Lösung dieser Aufgabe ist erfindungsgemäß vorgesehen, eine Sonnenblende (1) mit mindestens einer integrierten Spiegelfläche im Sonnenblendenkörper (2) zur Verfügung zu stellen, wobei der Sonnenblendenkörper (2) eine Aufnahme für den Spiegel (15) enthält und dieser Spiegel (15) einen Träger aus Plastikglas aufweist, an dem Führungselemente (17) für Mittel zum Verbergen des mindestes einen Spiegel im Sonnenblendenkörper (2) direkt angespritzt sind.

Durch die Verwendung von Plastikglas wird der Aufbau der Sonnenblende wesentlich vereinfacht und das Problem der unterschiedlichen Wärmeausdehnungen von unterschiedlichen Materialien reduziert. Die Verletzungsgefahr an einem zerbrochenen Glasspiegel in der Sonnenblende entfällt und das Material Plastikglas ermöglich neue Designs und Gestaltungsmöglichkeiten.

Besonders vorteilhaft ist es, dass mit Plastikglas flache sowie jede Art von gewölbten Spiegel hergestellt werden können, sodass ohne Mehraufwand ein flacher Spiegel durch einen Spiegel mit flachen und konkaven Anteil ersetzt werden kann. Durch die erfindungsgemäßen Maßnahmen wird in einfacher und kostengünstiger Weise eine wesentliche Qualitätsverbesserung erreicht.

Ein Ausführungsbeispiel der Erfindung wird im Folgenden anhand der Zeichnung näher erläutert, und es zeigen:
- Fig. 1: eine Sonnenblende in Ansicht,
- Fig. 2: eine Verstärkungseinlage für die Sonnenblende nach Fig. 1,

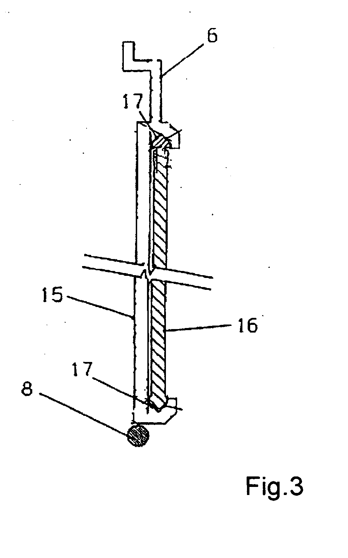

- Fig. 3: einen Schnitt etwa folgend der Linie A-A in Fig. 2 und
- Fig. 4: eine zweite Ausführungsform der Erfindung
- Fig 5: ein Schnitt durch die Ausführungsform nach Fig. 4
- Fig. 6: einen Schnitt mit alternativen Führungen
- Fig. 7: eine dritte Ausführungsform
- Fig.: 8 einen Spiegelausführung.

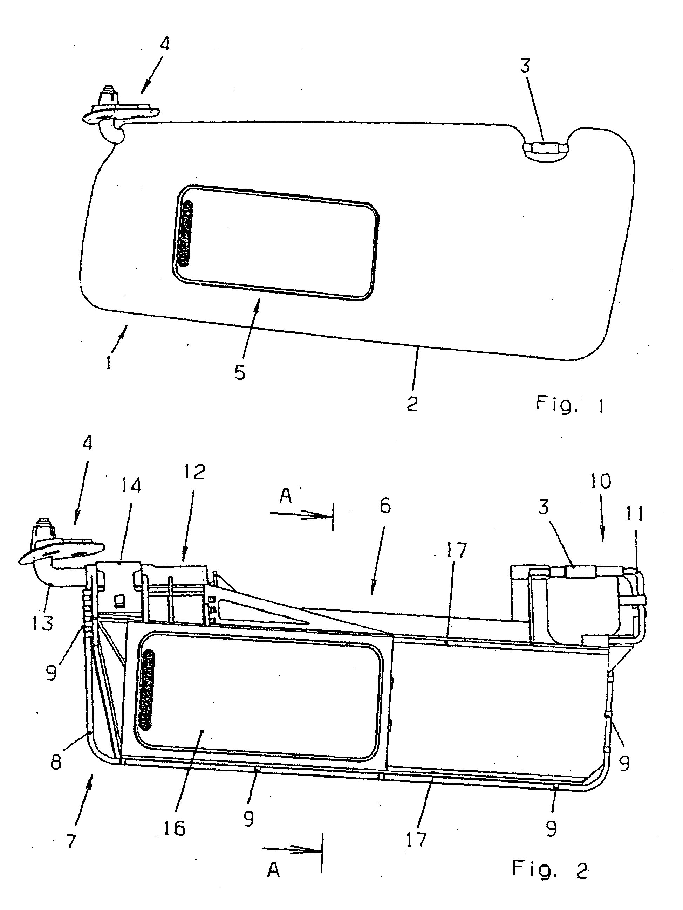

Fig. 1 stellt eine komplette Sonnenblende 1 dar, bestehend aus einem umhüllten Sonnenblendenkörper 2 mit einem Gegenlagerstift 3, einem montierten Anschraubaggregat 4 und einem im Sonnenblendenkörper 2 integriertem Spiegelsystem 5.

Das erste Ausführungsbeispiel zeigt eine Sonnenblende mit einem Schieber, der über einem Spiegel bewegbar angeordnet ist. Zur Benutzung des Spiegels wird er Schieber an seiner Griffleiste nach rechts bewegt und der verborgene Spiegel wird sichtbar.

Fig. 2 zeigt eine im Wesentlich aus Kunststoffspritzguss erstellte Verstärkungseinlage 6, die zur Vermeidung von Verwindungen im äußeren Bereich 7 eine U-förmige Drahtstabilisierung 8 aufweist, die an Einklipsstellen 9 festgelegt ist. Im Gegenlagerbereich 10 ist der an der Verstärkungseinlage 6 angespritzte Gegenlagerstift 3 mit einem Drahtbügel 11 durch Steckmontage verstärkt, um die Crashforderungen zu erfüllen. Die Verstärkungseinlage 6 weist einen Achsaufnahmebereich 12 für die Achse 13 des Anschraubaggregats 4 auf sowie eine Rastfeder 14 für das Gleit-/Rastmoment. Da die Verstärkungseinlage 6 vornehmlich für ein Blendenkörperhalbschalensystem vorgesehen ist, ist der Spiegel 15 mit dem Schieber 16 entsprechend Schnitt A-A ebenso vormontiert wie das Anschraubaggregat 4.

Erfindungsgemäß wird der Spiegel aus Plastikmaterial mit hoher Präzision gespritzt. Ein verfahren zur Herstellung von Plastikglas wird in der EP 1412158 A1 beschreiben. Das Verfahren ermöglicht eine hohe Maßhaltigkeit wie sie von einem Spiegelträger gefordert ist. Der Plastikglasträger wird nach dem Entformen weiteren Schritten unterzogen. Die Spiegelschicht wird auf das Trägermaterial aufgebracht und von einer Schutzschicht geschützt.

Die obere und untere V-artige Führung 17 für den Schieber 16 erstreckt sich nahezu über die gesamte Länge der Verstärkungseinlage 6. Diese Führung 17 wird beim Spritzen des Plastikglases direkt mit angespritzt und besteht aus demselben Material.

Der Schieber 16 ist ein Kunststoffspritzteil mit etwa rechteckiger Form mit einer Griffleiste 18 und der Ausbildung einer oberen und unteren V-artigen oder umgekehrt V-förmigen Randkante.

Die obere und unter V-artige Randkante am Schieber 16 und die obere und untere V-artige Führung 17 des Spiegels 15 bewirken durch ihre Kombination, der maßgenaue Abstimmung zum einen eine optimale Schiebe-/Gleitwirkung und zum anderen eine klapper- und spielfreie Paarung aufgrund der besonderen Formgebung der Gleit- und Führungszonen.

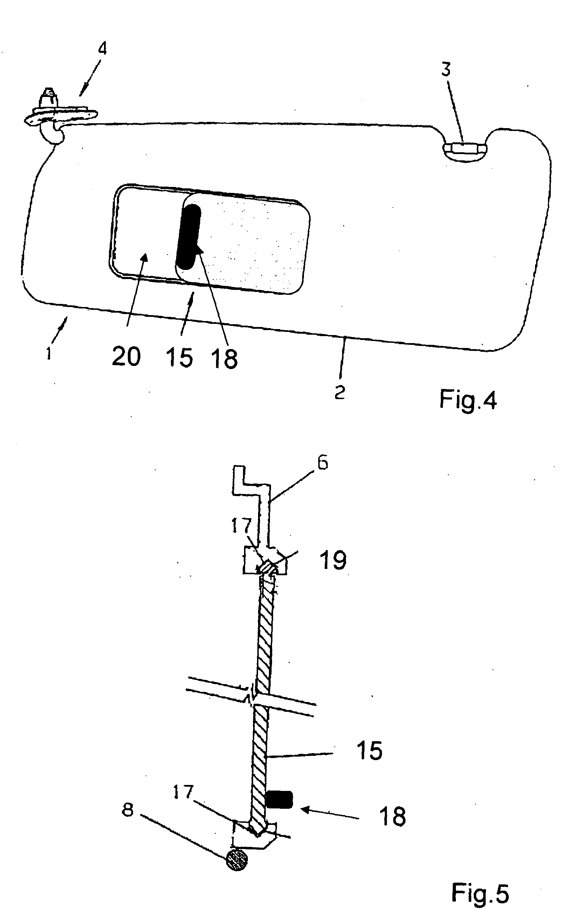

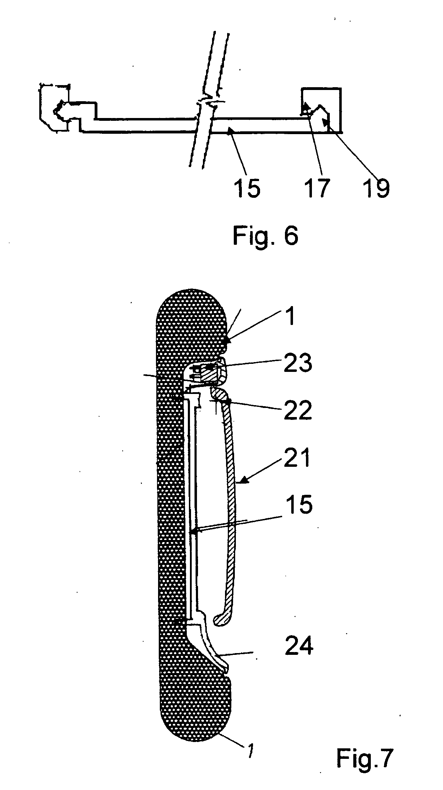

Fig 4 zeigt eine weitere Ausführungsform der erfindungsgemäßen Sonnenblende. Der Sonnenblendenkörper 1 weist eine Aussparung 20 auf, die von Führungen begrenzt ist. Der Plastikspiegel 15 ist in der Ruheposition hinter dem Sonneblendenkörper verborgen. Ein angespritzter Griff 18 auf dem Spiegel ermöglicht es dem Benutzer den Spiegel nach rechts aus einer taschenförmigen Aufnahme des Sonnenblendenkörpers zu ziehen. Der Plastikglasspiegel weist zu einer spiegelnden Fläche noch einen Griff sowie angespritzte Führungselemente in Form von Nasen 19 auf, die in die Führungen 17 eingreifen. Die Form der Nasen 19 kann wie in Figur 5 dargestellt in der Verlängerung der Fläche des Spiegels liegen oder wie in einer Ausführungsform nach Fig. 6 in einer Nase senkrecht zur Spiegelfläche oder durch einen abknickenden Steg.

Für die Erfindung ist die Art der Führung nicht wesentlich. Jede Führungsform die einem Fachmann zur Verfügung steht ist zur Ausführung der Erfindung geeignet.

Fig. 7 zeigt einen weitere Ausführungsform mit einer Abdeckklappe 21, die an einem Gelenk 22 angebracht ist. Die Klappe ist schwenkbar gelagert. Der Plastikglasspiegel 15 besteht aus der planen Spiegelfläche mit angespritzten Gelenk 22 und einem angespritzten wannenartigen Rahmen 24.

Auch in dieser Ausführungsform ist es wichtig, dass das Plastikglas mehrere Funktionen erfüllt, nämlich die Bereitstellung einer spiegelnden Fläche und die Führungselement zum Verbergen des Spiegels in der Sonnenblende.

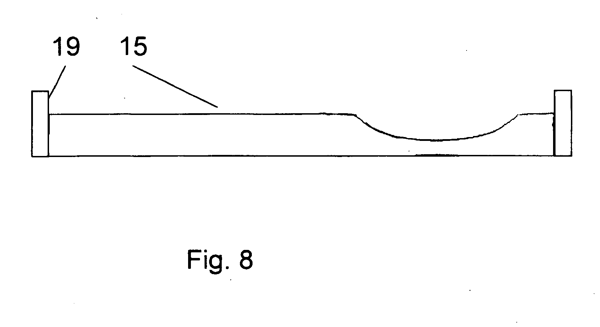

Figur 8 zeigt einen Ausführungsform mit einem planen und einem gewölbten Spiegelteil. Diese Form ist mit Plastikglas in einem Produktionsschritt herstellbar. In der Figur werden die Nasen zu Aufnahme in eine Führung 17 nur angedeutet.

Das Plastikglas weist in diesem Beispiel eine plane Rückseite auf, um das verbauen in der Sonnenblende zu vereinfachen.

### Bezugszeichenliste

- 1: Sonnenblende
- 2: Sonnenblendenkörper
- 3: Gegenlagerstift
- 4: Anschraubaggregat
- 5: Spiegelsystem
- 6: Verstärkungseinlage
- 7: äußerer Bereich
- 8: Drahtstabilisierung
- 9: Einklipsstelle
- 10: Gegenlagerbereich
- 11: Drahtbügel
- 12: Achsaufnahmebereich
- 13: Achse
- 14: Rastfeder
- 15: Spiegel
- 16: Schieber
- 17: Führung
- 18: Griffleiste
- 19: Nase
- 20: Aussparung
- 21: Abdeckklappe
- 22: Gelenk
- 23: Schalter
- 24: angespritzte Rahmen

## Patentansprüche

1. Sonnenblende (1) mit mindestens einer integrierten Spiegelfläche im Sonnenblendenkörper (2), wobei der Sonnenblendenkörper (2) eine Aufnahme für den mindestens einen Spiegel (15) enthält, **dadurch gekennzeichnet, dass** der Spiegel (15) einen Träger aus Plastikglas aufweist, an dem Führungselemente (17) für Mittel zum Verbergen des mindestes einen Spiegel im Sonnenblendenkörper (2) direkt angespritzt sind.

2. Sonnenblende (1) nach Anspruch 1 **dadurch gekennzeichnet, dass** an das Plastikglas Führungen in Form von Nuten angespritzt sind und der Spiegel (15) mit einem Schieber (16), der in den Nuten (17) läuft, abdeckbar ist.

3. Sonnenblende (1) nach Anspruch 1 **dadurch gekennzeichnet, dass** an das Plastikglas Führungen in Form von Nasen angespritzt sind, die zur Aufnahme einerAbdeckklappe dienen.

4. Sonnenblende (1) nach Anspruch 1 **dadurch gekennzeichnet, dass** an das Plastikglas Führungen in Form von Stegen angespritzt sind.

5. Sonnenblende (1) nach Anspruch 1 **dadurch gekennzeichnet, dass** an das Plastikglas ein Griff angespritzt ist.

6. Sonnenblende (1) nach Anspruch 1 **dadurch gekennzeichnet, dass** an das Plastikglas rückseitig mit einer reflektierenden Schicht bedampft ist.

7. Sonnenblende (1) nach Anspruch 1 **dadurch gekennzeichnet, dass** an das Plastikglas vorderseitig mit einer reflektierendeh Schicht bedampft ist.

8. Sonnenblende (1) nach Anspruch 1 **dadurch gekennzeichnet, dass** das Plastikglas aus einem flachen und einem konkav geformten Teil besteht.

9. Sonnenblende (1) nach Anspruch 1 **dadurch gekennzeichnet, dass** das Plastikglas einen angespritzten Griff (18) aufweist.

## Claims

1. A sun visor (1) comprising at least one mirror surface integrated in the sun visor body (2), wherein the sun visor body (2) comprises a receiver for at least one mirror (15), which comprises a support made of plastic glass, wherein guide elements (17) for means for concealing the at least one mirror in the sun visor body (2) are integrally molded at said support.

2. A sun visor (1) according to claim 1, wherein guides shaped as grooves are integrally molded at the plastic glass and the mirror (15) can be covered by a slide (16), which runs in the grooves (17).

3. A sun visor (1) according to claim 1, wherein guides formed as lugs are integrally molded at the plastic glass, wherein said lugs are configured to receive a cover flap.

4. A sun visor (1) according to claim 1, wherein guides in the form of bars are integrally molded at the plastic glass.

5. A sun visor (1) according to claim 1, wherein a handle is integrally molded at the plastic glass.

6. A sun visor (1) according to claim 1, wherein the plastic glass is vapor deposited with a reflecting layer on its backside.

7. A sun visor (1) according to claim 1, wherein the plastic glass is vapor deposited with a reflecting layer on its front side.

8. A sun visor (1) according to claim 1, wherein the plastic glass is comprised of a portion with flat shape and a portion with a concave shape.

9. A sun visor (1) according to claim 1, wherein the plastic glass comprises an integrally molded handle (18).

## Revendications

1. Pare-soleil (1) comprenant au moins une surface de miroir intégrée dans le corps du pare-soleil (2), dans lequel le corps du pare-soleil (2) contient un logement pour l'au moins un miroir (15), **caractérisé en ce que** le miroir (15) présente un support en verre plastique sur lequel des éléments de guidage (17) pour des moyens de cacher l'au moins un miroir sont directement moulés par injection dans le corps du pare-soleil (2).

2. Pare-soleil (1) selon la revendication 1, **caractérisé en ce que** des guides sous la forme de rainures sont moulés par injection sur le verre plastique et le miroir (15) peut être recouvert avec une coulisse (16) qui s'étend dans les rainures (17).

3. Pare-soleil (1) selon la revendication 1, **caractérisé en ce que** des guides sous la forme de nez sont moulés par injection sur le verre plastique, lesquels servent à recevoir un clapet de recouvrement.

4. Pare-soleil (1) selon la revendication 1, **caractérisé en ce que** des guides sous la forme de traverses sont moulés par injection sur le verre plastique.

5. Pare-soleil (1) selon la revendication 1, **caractérisé en ce qu'**une poignée est moulée par injection sur le verre plastique.

6. Pare-soleil (1) selon la revendication 1, **caractérisé en ce que** le côté arrière du verre plastique est vaporisé d'une couche réfléchissante.

7. Pare-soleil (1) selon la revendication 1, **caractérisé en ce que** le côté avant du verre plastique est vaporisé d'une couche réfléchissante.

8. Pare-soleil (1) selon la revendication 1, **caractérisé en ce que** le verre plastique se compose d'une partie plate et d'une partie moulée de manière concave.

9. Pare-soleil (1) selon la revendication 1, **caractérisé en ce que** le verre plastique présente une poignée moulée par injection (18).
